# EUROPÄISCHE PATENTANMELDUNG

(11) **EP 0 601 994 A1**
(43) Veröffentlichungstag der Anmeldung: **15.06.1994**
(21) Anmeldenummer: 93890232.7
(22) Anmeldetag: 30.11.1993
(51) Int. Cl.: B01D 53/34, B01D 53/62, B01J 20/34

(54) **Verfahren und Vorrichtung zum Reinigen der mit brennbaren Schadstoffen beladenen Abgase einer Desorptionsstufe**

(30) Priorität: 09.12.1992 AT 2426/92
(71) Anmelder: KVT VERFAHRENSTECHNIK GESELLSCHAFT mbH, A-4762 St. Willibald 36 (AT)
(72) Erfinder: Samhaber, Friedrich, Dr. Dipl.-Ing., A-4722 Peuerbach (AT)
(74) Vertreter: Hübscher, Heiner, Dipl.-Ing.

(57) **Zusammenfassung**

Es wird ein Verfahren und eine Vorrichtung zum Reinigen der mit brennbaren Schadstoffen beladenen Abgase einer mit einem Desorptionsgas betriebenen Desorptionsstufe (4) durch ein Nachverbrennen beschrieben, wobei zur Vermeidung von Stickoxiden die Desorptionsstufe (4) mit einem stickstofffreien Inertgas betrieben und die Nachverbrennung in einer stickstofffreien Atmosphäre durchgerührt wird. Die Rauchgase aus der Nachverbrennung werden der Desorptionsstufe (4) als Desorptionsgas im Kreislauf zugeführt.

## Beschreibung

Die Erfindung bezieht sich auf ein Verfahren zum Reinigen der mit brennbaren Schadstoffen beladenen Abgase einer mit einem Desorptionsgas betriebenen Desorptionsstufe, durch ein Nachverbrennen unter Zufuhr eines sauerstoffhältigen Brenngases, wobei zumindest ein Teil der Rauchgase aus der Nachverbrennung als Desorptionsgas über die Desorptionsstufe im Kreislauf geführt wird, und auf eine Vorrichtung zum Durchführen des Verfahrens.

Bei einer Reinigung von mit brennbaren Schadstoffen, wie organischen oder anorganischen Kohlenstoffverbindungen, belasteten Abgasen durch Adsorption lagern sich die Schadstoffe am Adsorptionsmittel an, das nach einer entsprechenden Schadstoffanlagerung entweder kostenaufwendig entsorgt oder in einem weiteren Verfahrensschritt regeneriert werden muß. Die an sich vorteilhafte Regeneration durch ein Desorbieren führt allerdings zu einem mit den brennbaren Schadstoffen belasteten Desorptionsgas, üblicher Weise heiße Luft oder heißer Stickstoff, das wieder gereinigt werden muß. Erfolgt diese Reinigung durch eine katalytische Oxidation (DE-OS 40 03 668), so dürfen keine Katalysatorgifte im Desorptionsgas enthalten sein, was die Anwendungsmöglichkeiten einer solchen katalytischen Oxidation stark einschränkt. Zum Reinigen des Desorptionsabgases empfiehlt sich eine Nachverbrennung (DE-OS 25 49 522), die jedoch zu einer Stickoxidbelastung der Rauchgase führt, weil zur Erzeugung des Desorptionsgases Kohlenwasserstoffe unter Luftzufuhr verbrannt werden, so daß Stickoxide auch dann auftreten, wenn die Nachverbrennung unter Zufuhr von reinem Sauerstoff erfolgt.

Um den Gasbedarf gering halten und die Temperatur des Desorptionsgases steuern zu können, ist es darüber hinaus bekannt (DE-OS 27 12 250), das schadstoffbelastete Desorptionsgas zusammen mit gesondert zugeführten Kohlenwasserstoffen in einer gemeinsamen Verbrennungskammer unter Luftzufuhr zu verbrennen und einen Teil der Rauchgase der Desorptionsstufe wieder als Desorptionsgas zuzuführen. Abgesehen davon, daß die gesonderte Zufuhr von Kohlenwasserstoffen den Aufwand erheblich vergrößert, fallen zwangsläufig wieder Stickoxide an.

Der Erfindung liegt somit die Aufgabe zugrunde, ein Verfahren zum Reinigen der mit brennbaren Schadstoffen belasteten Abgase einer Desorptionsstufe der eingangs geschilderten Art so auszugestalten, daß eine Nachverbrennung der Desorptionsabgase ohne Umweltbelastung, insbesondere durch Stickoxide, sichergestellt werden kann.

Die Erfindung löst die gestellte Aufgabe dadurch, daß die Desorptionsstufe mit einem stickstofffreien Inertgas als Desorptionsgas betrieben wird und daß als Brenngas für die Nachverbrennung reiner Sauerstoff oder ein mit Sauerstoff versetztes, stickstofffreies Inertgas eingesetzt wird.

Da durch den Einsatz eines stickstofffreien Inertgases als Desorptionsgas das Abgas aus der Desorptionsstufe ebenfalls stickstofffrei ist, kann die Nachverbrennung in einer stickstofffreien Atmosphäre erfolgen, wenn der für die Nachverbrennung benötigte Sauerstoff rein oder in einem Gemisch mit einem stickstofffreien Inertgas zugeführt wird. Wegen des Fehlens von Stickstoff kann somit die Bildung von Stickoxiden bei der Nachverbrennung mit Sicherheit ausgeschlossen werden. Wegen der Kreislaufführung der stickstofffreien Rauchgase können Umweltbelastungen auch mit anderen Schadstoffen als Stickoxide ausgeschlossen werden, weil ja alle Schadstoffe im Kreislauf verbleiben. Als stickstofffreie Inertgase können für die Desorption vorteilhaft Argon, Helium, Kohlendioxid oder Gemische dieser Gase eingesetzt werden. Der Sauerstoffanteil der Desorptionsgase soll dabei innerhalb bestimmter Grenzen liegen. Liegt das Volumsverhältnis von Desorptionsgas auf der Basis von Argon bzw. Helium zu Sauerstoff zwischen 2 : 1 und 8 : 1, so kann den üblichen Bedingungen gut entsprochen werden. Ein bevorzugter Bereich ergibt sich durch das Desorptionsgas-Sauerstoffverhältnis von 4 : 1.

Wird als Desorptionsgas Kohlendioxid eingesetzt, so empfiehlt sich ein Volumsverhältnis zwischen Desorptionsgas und Sauerstoff von 0,8 : 1 bis 5 : 1, vorzugsweise 3 : 1.

Soll beim Einsatz von Argon bzw. Helium für die Desorption eine Kohlendioxidzunahme im geschlossenen Gaskreislauf vermieden werden, so kann in weiterer Ausbildung der Erfindung vom Rauchgasstrom aus der Nachverbrennung ein Teilstrom abgezweigt werden, aus dem zumindest ein Teil des enthaltenen Kohlendioxids entfernt wird, bevor dieser abgezweigte Teilstrom dem verbliebenen, im Kreislauf geführten Rauchgasstrom wieder zugeführt wird. Damit der mit den Rauchgasen aus der Nachverbrennung beschickten Desorptionsstufe ein Desorptionsgas mit einem gleichbleibenden Kohlendioxidgehalt angeboten werden kann, kann der Rauchgasteilstrom vom Rauchgasstrom in einer Menge abgezweigt werden, die vom Kohlendioxidgehalt des im Kreislauf geführten Rauchgasstromes nach der Zumischung des vorher abgezweigten Teilstromes abhängt, so daß der Abscheidungsgrad für das Kohlendioxid in Abhängigkeit von der sich bei der Verbrennung bildenden Kohlendioxidmenge geändert wird. Fällt bei der Nachverbrennung ein größerer Kohlendioxidanteil an, so wird über die Kohlendioxiderfassung für den der Desorptionsstufe zugeführten Gasstrom ein entsprechender Anstieg der Kohlendioxidkonzentration gemessen, was zu einer Vergrößerung des Rauchgasteilstromes führt, aus dem das Kohlendioxid entfernt wird.

Zur Entfernung des Kohlendioxids aus dem Rauchgasteilstrom eignen sich vor allem für diesen Zweck bewährte Adsorptions- oder Absorptionsverfahren. Als Absorptionsmittel können vorteilhaft Waschflüssigkeiten auf der Basis von Natriumhydroxid, Kaliumhydroxid oder Calciumhydroxid eingesetzt werden. Als Adsorptionsmittel eignet sich in besonders vorteilhafter Weise Natronkalk. Beim Einsatz eines Absorptionsverfahrens mit Hilfe von Natriumhydroxid als Waschflüssigkeit fällt als Nebenprodukt bei der Kohlendioxidentfernung lediglich eine Lösung von Natriumcarbonat an, die entweder wieder verwertet wird oder in jeder Neutralisationsanlage als Neutralisationsmittel Verwendung finden kann.

Zur Durchführung des Verfahrens zum Reinigen stickstofffreier Abgase von brennbaren Schadstoffen kann von einer Vorrichtung mit einer an eine Desorptionsgasleitung angeschlossenen Desorptionsstufe, deren Abgasleitung zu einer Nachverbrennungeinrichtung geführt ist, und mit einer Zuleitung für ein sauerstoffhältiges Brenngas zur Nachverbrennungseinrichtung ausgegangen werden, die an eine Rauchgasableitung angeschlossen ist. Zur Kreislaufführung des Gasstromes muß die Rauchgasableitung mit der Desorptionsgasleitung in Verbindung stehen, wobei zur Rauchgasableitung eine über einen Kohlendioxidabscheider geführte Zweigleitung parallel geschaltet wird, um für eine entsprechende Kohlendioxidabscheidung zu sorgen. Der gerätetechnische Aufwand bleibt demgemäß vergleichsweise gering.

Wird die Zweigleitung zum Kohlendioxidabscheider mit einem Steuerventil versehen, das über einen Regler betätigt wird, der eingangseitig mit einem an die Desorptionsgasleitung angeschlossenen Meßwertgeber für den Kohlendioxidgehalt verbunden ist, so kann der Kohlendioxidgehalt in der Desorptionsgasleitung unabhängig von dem bei der Verbrennung anfallenden Kohlendioxid konstant gehalten werden. Die Menge des dem Kohlendioxidabscheider zugeführten Rauchgasteilstromes wird ja in Abhängigkeit vom Kohlendioxidgehalt des der Desorptionsstufe zuströmenden Rauchgasstromes gesteuert.

In ähnlicher Weise kann die für die Nachverbrennung benötigte Sauerstoffmenge geregelt werden, wenn die Zuleitung für das sauerstoffhältige Brenngas ein an einen Regler angeschlossenes Steuerventil aufweist, der eingangsseitig mit einem an die Abgasleitung der Desorptionsstufe angeschlossenen Meßwertgeber für den Sauerstoffgehalt verbunden ist.

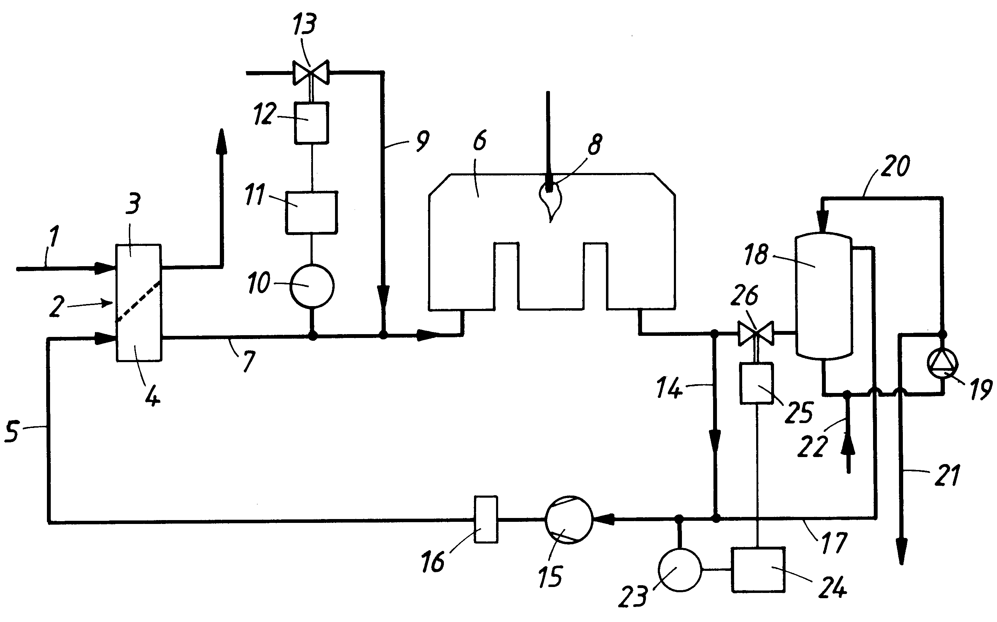

An Hand der Zeichnung wird das erfindungsgemäße Verfahren zum Reinigen der mit brennbaren Schadstoffen belasteten Abgase einer Desorptionsstufe näher erleutert, und zwar wird eine erfindungsgemäße Vorrichtung zum Durchführen des Verfahrens in einem schematischen Blockschaltbild gezeigt.

Um ein mit brennbaren Schadstoffen belastetes Abgas, beispielsweise ein lösungsmittelhältiges Abgas aus einer Lakkieranlage, von diesen Schadstoffen zu befreien, wird dieses Abgas über eine Leitung 1 einer entsprechenden Reinigungsanlage 2 zugeführt, die gemäß dem dargestellten Ausführungsbeispiel als ein mit einem Adsorptionsmittel gefülltes Rad ausgebildet ist, das zwei voneinander getrennte Abschnitte für eine Adsorptionsstufe 3 und eine Desorptionsstufe 4 bildet. Das über die Gasleitung 1 zugeführte Abgas aus der Lackieranlage durchströmt die Adsorptionsstufe 3, wobei sich die Schadstoffe an der Oberfläche des Adsorptionsmittels, beispielsweise Zeolith, anlagern. Zur Regenerierung des Adsorptionsmittels wird das Rad gedreht, so daß das mit den Schadstoffen beladene Adsorptionsmittel in den Bereich der Desorptionsstufe 4 gelangt, wo die Schadstoffe mit Hilfe eines der Desorptionsstufe 4 über eine Desorptionsgasleitung 5 zugeführten Desorptionsgases vom Adsorptionsmittel abgelöst und mit dem Desorptionsgas als Trägergas ausgefördert werden.

Zum Entfernen der Schadstoffe aus dem Desorptionsabgas ist eine Nachverbrennungseinrichtung 6 vorgesehen, die an die Abgasleitung 7 der Desorptionsstufe 4 angeschlossen ist. Diese Nachverbrennungseinrichtung 6 weist drei mit wabenförmigen Keramikelementen zur Wärmeübertragung versehene Kammern auf, die von dem sich bei der Verbrennung bildenden Rauchgas durchströmt werden. Die den Kammern in Strömungsrichtung vorgelagerte Brennkammer ist mit wenigstens einem Brenner 8 versehen, der z. B. neben Butan als Heizgas mit einem Gemisch von 30 Vol.% Sauerstoff und 70 Vol.% Argon gespeist wird. Dieser Brenner 8 wird allerdings nur zum Anfahren der Anlage, nicht aber im Dauerbetrieb benötigt, weil wegen des hohen Schadstoffgehaltes des Desorptionsabgases aus der Desorptionsstufe 4 die Verbrennungsenergie der Schadstoffe für die Aufrechterhaltung der Nachverbrennung ausreicht.

Die bei der Nachverbrennung aufgebrauchte Sauerstoffmenge wird laufend über eine Zuleitung 9 zur Abgasleitung 7 ergänzt, an die ein Meßwertgeber 10 für den Sauerstoffgehalt angeschlossen ist. Dieser Meßwertgeber 10 beaufschlagt einen Regler 11, der wiederum das Stellglied 12 eines Steuerventiles 13 in der Zuleitung 9 ansteuert, so daß über diesen Regler 11 die Sauerstoffzufuhr an den Sauerstoffverbrauch angepaßt werden kann. Über die Zuleitung 9 kann entweder reiner Sauerstoff oder ein Gemisch aus Sauerstoff und einem Inertgas dem Abgasstrom aus der Desorptionsstufe 4 zugefördert werden.

Der Rauchgasstrom aus der Nachverbrennungseinrichtung 6 wird über eine Rauchgasableitung 14 der mit einem Gebläse 15 und einem Filter 16 versehenen Desorptionsgasleitung 5 zugeleitet, so daß ein geschlossener Gaskreislauf entsteht, der beim Einsatz eines stickstofffreien Desorptionsgases auch stickstofffrei bleibt, weil kein Stickstoff von außen zugeführt wird. Dies bedeutet, daß die Nachverbrennung in der Einrichtung 6 ohne Stickoxidbildung durchgeführt werden kann.

Um den bei der Verbrennung entstehenden Kohlendioxidanteil entsprechend abbauen zu können, ist an die Rauchgasableitung 14 eine parallele Zweigleitung 17 angeschlossen, die über einen Kohlendioxidabscheider 18 führt. Dieser Kohlendioxidabscheider 18 besteht gemäß dem Ausführungsbeispiel aus einem Waschturm, in dem der vom Rauchgasstrom abgezweigte Teilstrom mit Hilfe einer Natriumhydroxidlösung als Absorptionsmittel naß gereinigt wird. Dieses Absorptionsmittel wird über eine Pumpe 19 in einem Kreislauf 20 durch den Waschturm geführt, wobei das sich bildende Natriumcarbonat über die Leitung 21 abgeführt werden kann. Natriumhydroxid kann über die Zuleitung 22 dem Kreislauf 20 zudosiert werden. Das vom Kohlendioxid gereinigte Rauchgas wird dem verbliebenen Rauchgasstrom wieder zugeführt, was eine entsprechende Verdünnung des der Desorptionsstufe 4 zuströmenden Gasstromes hinsichtlich des Kohlendioxidgehaltes zur Folge hat. Um den Abscheidungsgrad für das Kohlendioxid an die sich jeweils bei der Verbrennung bildende Kohlendioxidmenge anpassen zu können, wird der Kohlendioxidgehalt des der Desorptionsstufe 4 zugeförderten Rauchgasstromes über einen Meßwertgeber 23 bestimmt, der an den Eingang eines Reglers 24 angeschlossen ist. Dieser Regler steuert das Stellglied 25 für ein Steuerventil 26 in der Zweigleitung 17, so daß durch einen Soll-Istwertabgleich der Kohlendioxidgehalt des der Anlage 2 zugeführten Desorptionsgases konstant gehalten werden kann.

Gemäß einem Anwendungsbeispiel wurde in der Adsorptionsstufe 3 der Anlage 2 ein lösungsmittelhältiges Abgas aus einer Lackieranlage in einer Menge von 100.000 Nm³/h gereinigt, wobei der als organischer Kohlenstoff berechnete Lösungsmittelgehalt von 350 mg/Nm³ auf einen Restgehalt von 20 mg/Nm³ herabgesetzt wurde. Zur Regeneration des Adsorptionsmittels, beispielsweise Zeolith, wurde der Desorptionsstufe 4 ein Gasgemisch aus 20 Vol.% Sauerstoff, 60 Vol.% Argon und 20 Vol.% Kohlendioxid als Desorptionsgas zugeführt, und zwar in einer Menge von 10.000 Nm³/h. Mit Hilfe dieses Desorptionsgases wurden die Schadstoffe vom Adsorptionsmittel abgelöst, wobei sich eine Schadstoffbelastung des Desorptionsgases von 3.500 mg/Nm³ (berechnet als organischer Kohlenstoff) ergab. Dieses schadstoffbelastete Desorptionsabgas aus der Anlage 2 wurde in der Nachverbrennungseinrichtung 6 bei einer Verbrennungstemperatur von 810° C einer Nachverbrennung unterworfen. Nach einer entsprechenden Wärmerückgewinnung in den für den Wärmeaustausch vorgesehenen Kammern der Nachverbrennungseinrichtung 6 konnte für das austretende Rauchgas eine Temperatur von 230 C gemessen werden. Von dem austretenden Rauchgasstrom wurde ein Teilstrom abgezweigt, und zwar in Abhängigkeit von dem durch den Meßwertgeber 23 bestimmten Kohlendioxidgehalt. Aus diesem abgezweigten Rauchgasteilstrom wurde im Kohlendioxidabscheider 18 durch eine Naßreinigung mit einer 5%igen Natronlaugenlösung der Kohlendioxidanteil aus dem Rauchgasteilstrom abgeschieden, so daß nach der Wiedervereinigung dieses Teilstromes mit dem verbliebenen Rauchgasstrom ein konstanter Kohlendioxidgehalt des der Desorptionsstufe 4 zugeführten Gasstromes von 20 Vol.% sichergestellt werden konnte. Die Temperatur dieses Gasstromes betrug etwa 180 C und wurde durch die Wärmeverluste in der Desorptionstufe 4 auf 150° C herabgesetzt. Der Restgehalt an Schadstoffen im Desorptionsgas betrug 10 mg/Nm³ (berechnet auf organischen Kohlenstoff).

Bei einem anderen Versuch wurden bei sonst gleichen Bedingungen 70.000 Nm³/h eines Abgases aus einer Lackieranlage gereinigt, das 250 mg/Nm³ Lösungsmittel (berechnet als organischer Kohlenstoff) aufwies. Das bei der Regenerierung des Adsorptionsmittels eingesetzte Desorptionsgas wurde in einer Menge von 7.000 Nm³/h durch die Desorptionsstufe 4 der Anlage 2 geleitet und wies nach dem Durchgang durch die Desorptionsstufe 4 eine Schadstoffbelastung von 2.500 mg/Nm³ (berechnet als organischer Kohlenstoff) auf. Dieses Desorptionsgas wurde der Nachverbrennungseinrichtung mit einer Temperatur von 150° C zugefördert und verließ die Nachverbrennungseinrichtung 6 mit einer Temperatur von 210° C. Die Temperatur des Rauchgasstromes nach der Wiedervereinigung mit dem vorher abgezweigten Teilstrom betrug 170° C. Die Restbelastung der Rauchgase mit den Schadstoffen betrug 10 mg/Nm³ (berechnet als organischer Kohlenstoff).

Es braucht wohl nicht erwähnt zu werden, daß die Zusammensetzung des Desorptionsgases unterschiedlich sein kann. So ist es beispielsweise möglich, für das Desorptionsgas eine Zusammensetzung aus 20 Vol.% Sauerstoff, 30 Vol.% Argon, 30 Vol.% Helium und 20 Vol.% Kohlendioxid zu verwenden. Es kann aber auch der gesamte Rauchgasstrom aus der Nachverbrennungseinrichtung 6 über den Kohlendioxidabscheider geführt werden, um ein kohlendioxidfreies Desorptionsgas sicherzustellen. Ein solches Desorptionsgas könnte eine Zusammensetzung aus 20 Vol.% Sauerstoff, 40 Vol.% Argon und 40 Vol.% Helium aufweisen. Eine weitere Möglichkeit besteht darin, als Desorptionsgas ein Gas auf der Basis von Kohlendioxid einzusetzen, das beispielsweise 25 Vol.% Sauerstoff, Rest Kohlendioxid enthält. An Stelle von Argon kann aber auch Helium zum Einsatz kommen, wobei sich eine Zusammensetzung aus 22 Vol.% Sauerstoff, 58 Vol.% Helium und 20 Vol.% Kohlendioxid ergeben kann.

## Patentansprüche

1. Verfahren zum Reinigen der mit brennbaren Schadstoffen beladenen Abgase einer mit einem Desorptionsgas betriebenen Desorptionsstufe durch ein Nachverbrennen unter Zufuhr eines sauerstoffhältigen Brenngases, wobei zumindest ein Teil der Rauchgase aus der Nachverbrennung als Desorptionsgas über die Desorptionsstufe im Kreislauf geführt wird. dadurch gekennzeichnet, daß die Desorptionsstufe mit einem stickstofffreien Inertgas als Desorptionsgas betrieben wird und daß als Brenngas für die Nachverbrennung reiner Sauerstoff oder ein mit Sauerstoff versetztes, stickstofffreies Inertgas eingesetzt wird.

2. Verfahren nach Anspruch 1, dadurch gekennzeichnet, daß als Desorptionsgase Argon, Helium, Kohlendioxid oder Gemische dieser Gase eingesetzt werden.

3. Verfahren nach Anspruch 2, dadurch gekennzeichnet, daß das Desoptionsgas auf der Basis von Argon bzw. Helium Sauerstoff in einem Volumsverhältnis von 2 : 1 bis 8 : 1, vorzugsweise 4 : 1, enthält.

4. Verfahren nach Anspruch 2, dadurch gekennzeichnet, daß das Desorptionsgas auf der Basis von Kohlendioxid Sauerstoff in einem Volumsverhältnis von 0,8 : 1 bis 5 : 1, vorzugsweise 3 : 1, enthält.

5. Verfahren nach einem der Ansprüche 1 bis 3, dadurch gekennzeichnet, daß von dem Rauchgasstrom aus der Nachverbrennung ein Teilstrom abgezweigt wird, aus dem zumindest ein Teil des enthaltenen Kohlendioxids entfernt wird, bevor dieser abgezweigte Teilstrom dem verbliebenen, im Kreislauf geführten Rauchgasstrom wieder zugeführt wird.

6. Verfahren nach Anspruch 5, dadurch gekennzeichnet, daß der Rauchgasteilstrom vom Rauchgasstrom in einer Menge abgezweigt wird, die vom Kohlendioxidgehalt des im Kreislauf geführten Rauchgasstromes nach der Zumischung des vorher abgezweigten Teilstromes abhängt.

7. Verfahren nach Anspruch 5 oder 6, dadurch gekennzeichnet, daß das Kohlendioxid mit Hilfe eines Absorptionsmittels, beispielsweise Natriumhydroxid, Kaliumhydroxid oder Calciumhydroxid, oder mit Hilfe eines Adsorptionsmittels, beispielsweise Natronkalk, aus dem Rauchgasteilstrom abgeschieden wird.

8. Vorrichtung zum Durchführen des Verfahrens nach einem der Ansprüche 1 - 7 mit einer an eine Desorptionsgasleitung (5) angeschlossenen Desorptionsstufe (4), deren Abgasleitung (7) zu einer Nachverbrennungseinrichtung (6) geführt ist, und mit einer Zuleitung (9) für ein sauerstoffhältiges Brenngas zur Nachverbrennungseinrichtung, die an eine mit der Desorptionsgasleitung (5) in Verbindung stehende Rauchgasableitung (14) angeschlossen ist, dadurch gekennzeichnet, daß zur Rauchgasableitung (14) eine über einen Kohlendioxidabscheider (18) geführte Zweigleitung (17) parallel geschaltet ist.

9. Vorrichtung nach Anspruch 8, dadurch gekennzeichnet, daß die Zweigleitung (17) ein an einen Regler (24) angeschlossenes Steuerventil (26) aufweist, der eingangsseitig mit einem an die Gaszuleitung (5) für die Desorptionsstufe (4) angeschlossenen Meßwertgeber (23) für den Kohlendioxidgehalt verbunden ist.

10. Vorrichtung nach Anspruch 8 oder 9, dadurch gekennzeichnet, daß die Zuleitung (9) für das sauerstoffhältige Brenngas ein an einen Regler (11) angeschlossenes Steuerventil (13) aufweist, der eingangsseitig mit einem an die Abgasleitung (7) der Desorptionsstufe (4)) angeschlossenen Meßwertgeber (10) für den Sauerstoffgehalt verbunden ist.
